# EUROPÄISCHE PATENTSCHRIFT

(11) **EP 4 172 128 B1**
(45) Veröffentlichungstag und Bekanntmachung des Hinweises auf die Patenterteilung: **31.12.2025**
(21) Anmeldenummer: 21736320.9
(22) Anmeldetag: 28.06.2021
(51) Int. Cl.: C04B 35/622, F01D 11/00, F01D 11/02, F01D 11/08, F01D 11/12, F16J 15/44, F16J 15/447, F16J 15/453, C23C 4/12, B28B 1/16, B28B 7/00, B28B 11/00, B41F 15/34, B41F 15/36, B22F 3/11

(54) **DREIDIMENSIONALE SIEBDRUCKVERFAHREN UND DAMIT HERSTELLBARES BAUTEIL**
3D SCREEN PRINTING METHOD AND ITS RESUILTING BUILD PART
PROCÉDÉ DE SÉRIGRAPHIE 3D ET PIECE RESULTANT

(30) Priorität: 30.06.2020 DE 102020117176; 30.06.2020 DE 102020117177
(43) Veröffentlichungstag der Anmeldung: 03.05.2023
(73) Patentinhaber: Rolls-Royce Deutschland Ltd & Co KG, 15827 Blankenfelde-Mahlow (DE)
(72) Erfinder: DAENICKE, Enrico, 15827 Blankenfelde-Mahlow (DE); HINZE, Björn, 15827 Blankenfelde-Mahlow (DE); GÄBLER, Miklos, 15827 Blankenfelde-Mahlow (DE)
(86) Internationale Anmeldenummer: PCT/EP2021/067650
(87) Internationale Veröffentlichungsnummer: WO 2022/002832

(56) Entgegenhaltungen:
- EP-A1- 3 825 039
- DE-A1- 102012 215 710
- DE-A1- 102015 216 491
- US-A1- 2016 097 295
- US-A1- 2018 106 154

## Beschreibung

Die vorliegende Offenbarung bezieht sich auf ein dreidimensionale Siebdruckverfahren mit den Merkmalen des Anspruchs 1 oder des Anspruchs 2, ein damit herstellbares Bauteil mit den Merkmalen des Anspruchs 18 und eine Siebdruckmaske mit den Merkmalen des Anspruchs 22.

Die Herstellung von Grünteilen mittels Siebdruckverfahren ist grundsätzlich bekannt. So beschreibt die DE 10 2015 216 491 A1 die Herstellung von Anstreifdichtungen mittels eines dreidimensionalen Siebdruckes als Teil eines pulvermetallurgischen Verfahrens. Dabei geht es insbesondere um die Herstellung eines Grünteils mit Hohlstrukturen und vertikalen Wandstrukturen wie Honigwabenstrukturen.

Die Druckschriften US 2018/106154 A1 und DE 10 2012 215710 A1 beschreiben weiteres der Stand der Technik.

Anstreifdichtungen in Turbomaschinen, etwa in Flugzeug- oder Gasturbinen, unterliegen besonderen Anforderungen. Wenn ein Rotor auf eine Labyrinthdichtung trifft, sollte diese beim Einreiben möglichst nicht schmieren, nicht brechen und keine hohen Temperaturen erzeugen, was zu einer Belastung des rotierenden Bauteils führt.

Das Grünteil als Ausgangspunkt des pulvermetallurgischen Verfahrens wird dabei schichtenweise durch Siebdruck aufgebaut. Da die Schichten vergleichsweise dünn sind, wird ein solches Verfahren auch als 2,5-D Siebdruckverfahren bezeichnet.

Bei einem Siebdruck wird mit ebenen Schichten gearbeitet, so dass nach dem Abschluss des schichtenweisen Drucks ein Grünteil mit ebenen Außenkonturen (z.B. in Form einer quaderförmigen Anstreifdichtung) vorliegt. Im Inneren des Grünteils sind dann die vertikalen Wandstrukturen z.B. in Form von Honigwaben angeordnet.

Wenn nun ein solches Grünteil z.B. durch eine Krümmung verformt werden soll, kann es zu Rissen oder Defekten im Grünteil kommen, da die Wandungen des Grünteils und / oder die vertikalen Wandstrukturen durch die Krümmung verformt werden. Am äußeren Radius der Krümmung liegt Zug an, was zu Rissen führen kann. Am inneren Radius der Krümmung wird das Material gestaucht.

Es besteht daher die Aufgabe, effiziente Verfahren zur Herstellung eines Grünteils - und damit eines Bauteils - anzugeben.

Gemäß einem ersten Aspekt wird ein dreidimensionales Siebdruckverfahren mit den Merkmalen des Anspruchs 1 bereitgestellt.

Das Grünteil wird durch das dreidimensionale Siebdruckverfahren aus Druckmaterial im Rahmen eines pulvermetallurgischen Verfahrens hergestellt, wobei das Druckmaterial einen Anteil aus Pulver, insbesondere Keramik oder Metallpulver, und Binder aufweist oder aus diesen Materialien besteht. Aus dem Grünteil wird durch das pulvermetallurgische Verfahren schließlich ein Bauteil hergestellt, das z.B. in einem Gasturbinentriebwerk als Liner einsetzbar ist.

Es wird dabei eine Siebdruckmaske mit einer Siebdruckstruktur eingesetzt, wobei die Siebdruckmaske Öffnungen zum Durchdrücken des Druckmaterials aufweist und die Öffnungen teilweise wellenförmig ausgebildet sind, so dass das Grünteil mindestens teilweise eine dreidimensionale wellenförmige Struktur und / oder wellenförmige Ränder aufweist. Die wellenförmige Struktur liegt dabei im Inneren des Bauteils und ersetzt grundsätzlich bekannte Strukturen, wie z.B. Honigwabenstrukturen mit geraden Wänden. So können insbesondere auch Honigwabenstrukturen mit gewellten Wänden verwendet werden. Alternativ oder zusätzlich sind auch die Ränder des Bauteils wellenförmig ausgebildet.

Ein solches Grünteil wird nach der Herstellung verformt, da das Bauteil ebenfalls entsprechend verformt ausgebildet sein soll. Dabei kann die Verformung um mindestens eine Krümmungsachse erfolgten. Je nach Lage und Anzahl der Krümmungsachsen können komplexer geformte Grünteile hergestellt werden. Ein solches Grünteil kann z.B. um eine oder mehrere Achsen gekrümmt, d.h. verformt, werden, ohne dass Dehnungsrisse auftreten.

Demnach kann eine Verformung eine Streckung und / oder eine Stauchung im Grünteil bewirken, die zumindest von Teilen der wellenförmigen Struktur des Grünteils durch Anpassung der Wellenlänge ausgeglichen wird. In gedehnten Bereichen werden die wellenförmigen Strukturen weiter auseinander gezogen. In gestauchten Bereichen werden die Wellen zusammengeschoben. Dies kann auch als "Ziehharmonika-Effekt" beschrieben werden. Damit können Grünteile, und letztlich Bauteile mit komplexen Formen, effizient hergestellt werden.

Das Grünteil wird durch das dreidimensionale Siebdruckverfahren aus Druckmaterial im Rahmen eines pulvermetallurgischen Verfahrens hergestellt, wobei das Druckmaterial einen Anteil aus Pulver, insbesondere Keramik oder Metallpulver, und Binder aufweist oder aus diesen Materialien besteht. Aus dem Grünteil wird durch das pulvermetallurgische Verfahren schließlich ein Bauteil hergestellt, das z.B. in einem Gasturbinentriebwerk als Liner einsetzbar ist.

In einer Ausführungsform wird dabei ein Grünteil aus Druckmaterial für ein pulvermetallurgisches Bauteil hergestellt und das Grünteil wird nach der Herstellung bei Temperaturen zwischen 30 und 100 °C verformt, da das Bauteil ebenfalls entsprechend verformt ausgebildet sein soll. Insbesondere kann die Temperatur unterhalb von 90°, ganz insbesondere zwischen 30 und 60°C liegen. Da die Grünteile einen Wasseranteil aufweisen, wird dabei das Wasser (bei Atmosphärendruck) nicht zum Sieden gebracht.

Insbesondere kann die Temperatur dabei konstant sein. Für eine effiziente Verformung kann die Verformung mittels eines Formteils erfolgen, wobei die Verformungszeit insbesondere im Bereich zwischen 1 und 30 Sekunden liegen kann.

In einer Ausführungsform weist die wellenförmige Struktur die Form einer Honigwabe oder einer Raute auf. Damit können z.B. an sich bekannte Honigwabenstrukturen oder Rautenstrukturen mindestens teilweise wellenförmige Wandungen aufweisen.

Dabei kann die Siebdruckstruktur eine Vielzahl von wellenförmigen Öffnungen aufweisen, die mindestens teilweise parallel zueinander angeordnet sind, die untereinander insbesondere den gleichen Abstand voneinander haben und / oder die mindestens teilweise untereinander in Phase angeordnet sind. Eine wellenförmige Öffnung bedeutet hier, dass mindestens ein Abschnitt der Öffnung wellenförmig ausgebildet ist. Eine solche Ausführungsform kann dann ein sehr regelmäßiges Muster aufweisen, bei dem das resultierende Grünteil äquidistante, wellenförmige Strukturen oder z.B. Rautenstrukturen mit wellenförmigen Wandungen aufweist. Grundsätzlich ist es aber möglich, dass die wellenförmigen Strukturen nicht-gleichförmig aufgebaut sind. Die oben beschriebene Dehn- und Stauchbarkeit kann auch erreicht werden, wenn es über einen Teil des Grünteils wellenförmige Strukturen gibt, die sich untereinander auch der Form nach unterscheiden können.

In einer weiteren Ausführungsform weisen die wellenförmigen Öffnungen der Siebdruckstruktur über ihre Längserstreckung eine konstante Wellenlänge auf, wobei die Wellenlänge insbesondere größer als 50 µm und kleiner als 5000 µm ist. Durch die Verwendung von mehreren wellenförmigen Strukturen dieser Art kann funktionell eine ähnliche Struktur erreicht werden, die bekannten Honigwabenstrukturen. Wenn die Öffnungen der Siebdruckstrukturen diese Abmessungen aufweisen, liegen auch die Abmessung des Grünteils und letztlich des pulvermetallurgischen Bauteils in diesem Bereich.

Auch kann die Breite mindestens einer wellenförmigen Öffnung in der Siebdruckmaske größer als 50 µm und kleiner 5000 µm sein, so dass vergleichsweise dünnwandige wellenförmige Strukturen im Grünteil herstellbar sind.

In einer weiteren Ausführungsform weist mindestens eine wellenförmige Struktur des Grünteils eine Höhe in vertikaler Richtung zwischen 1 und 20 mm, insbesondere zwischen 2 und 10 mm, insbesondere 5 mm auf.

Auch kann mindestens eine wellenförmigen Öffnung der Siebdruckmaske und mindestens eine wellenförmige Struktur des Grünteils im horizontalen Schnitt mindestens teilweise eine Sinusform aufweisen. Eine Wellenform ist hier im Zusammenhang allgemeiner zu verstehen, als eine mathematisch exakte Sinusform. So können die wellenförmigen Strukturen z.B. gerade Abschnitte aufweisen, ohne ihren wellenförmigen Charakter zu verlieren.

So kann das Grünteil insbesondere um zwei Achsen verformt werden. Insbesondere kann das Grünteil so verformt werden, dass eine Vertiefung oder eine Auswölbung hervorgerufen wird. In jedem Fall wird die Verformung im Grünteil - wie oben beschrieben - durch die wellenförmigen Strukturen aufgefangen.

In einer Ausführungsform ist das unverformte Grünteil im Wesentlichen (vor allem hinsichtlich der Außenform) quaderförmig ausgebildet und die Verformung des Grünteils umfasst eine Biegung um eine Krümmungsachse, wobei die Krümmungsachse in einer Ebene liegt, die parallel oder geneigt zu einer Seitenfläche des Grünteils liegt.

In einer Ausführungsform des Verfahrens werden nach der Verformung eine Entbinderung und eine Sinterung, insbesondere unter Vakuum, durchgeführt.

Bei einer Verformung des Grünteils kommt es insbesondere auf die thermischen Bedingungen an. So kann die Verformung insbesondere bei einem Druck zwischen 0,8 und 1,2 bar, insbesondere bei 1 bar erfolgen, da dabei die ohne großen Aufwand die Feuchtigkeit steuerbar ist. Auch kann die Verformung des Grünteils bei einer relativen Luftfeuchtigkeit 60 bis 100%, insbesondere bei einer relativen Luftfeuchtigkeit zwischen 80 und 100% erfolgen.

Die Aufgabe wird auch durch ein Bauteil gelöst, das mit mindestens einer der Ausführungsformen des dreidimensionalen Siebdruckverfahrens herstellbar ist. Ein solches Bauteil weist mindestens eine wellenförmige Struktur auf. Bei einer Verformung des Bauteils im Herstellungsprozess, oder ggf. auch im Betrieb, kann die wellenförmige Struktur gezielt Dehnungen und / oder Stauchungen aufnehmen, so dass Risse oder Materialstauchungen vermieden oder zumindest minimiert werden. Ein mögliches Einsatzgebiet ist eine Dichtfläche, insbesondere in einer Anstreifdichtung in einer Turbomaschine oder als ein Teil einer Anstreifdichtung für eine Turbomaschine. Eine Anstreifdichtung kann als Labyrinthdichtung ausgeführt sein.

In einer Ausführungsform ist das Bauteil mindestens teilweise schalenförmig oder konisch ausgebildet. Solche Bauteile können vorzugsweise zur Auskleidung von Kanälen verwendet werden. Dabei kann z.B. der Krümmungsradius zwischen 50 mm und 2000 mm, insbesondere zwischen 100 und 200 mm, liegen.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und / oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben; in den Figuren zeigen:
- Figur 1: eine schematische Darstellung eines grundsätzlich bekannten dreidimensionalen Siebdruckverfahrens, mit dem ein Grünteil hergestellt wird;
- Figur 1A: eine schematische Darstellung einer Verformung des Grünteils;
- Figur 1B: eine schematische Darstellung einer Entbinderung und eines Sinterns des Grünteils;
- Figur 1C: eine schematische Darstellung des verformten Bauteils;
- Figur 2: eine schematische Draufsicht auf eine Ausführungsform einer ebenen Siebdruckmaske zur Herstellung eines Grünteils;
- Figur 3: eine schematische Draufsicht auf eine Ausführungsform eines verformten Grünteils, hergestellt mit einer Siebdruckmaske gemäß Figur 2;
- Figur 3A: eine schematische Draufsicht auf eine Abwandlung der Ausführungsform des Grünteils gemäß Figur 3;
- Figur 4: eine schematische Seitenansicht eines um eine Achse verformten Grünteils;
- Figur 4A: eine schematische, dreidimensionale Ansicht einer Ausführungsform eines verformten Grünteils;

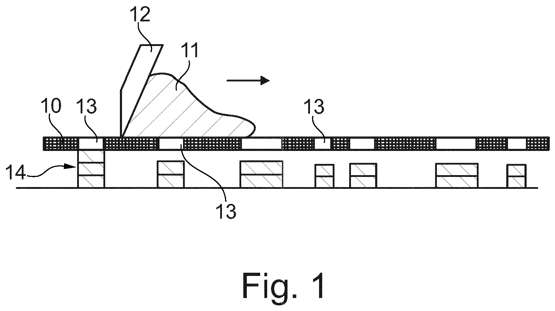

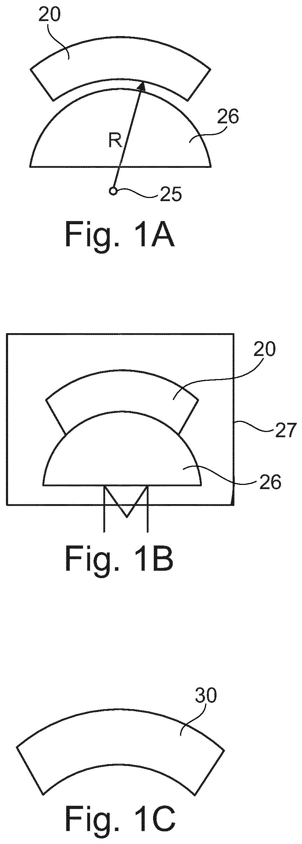

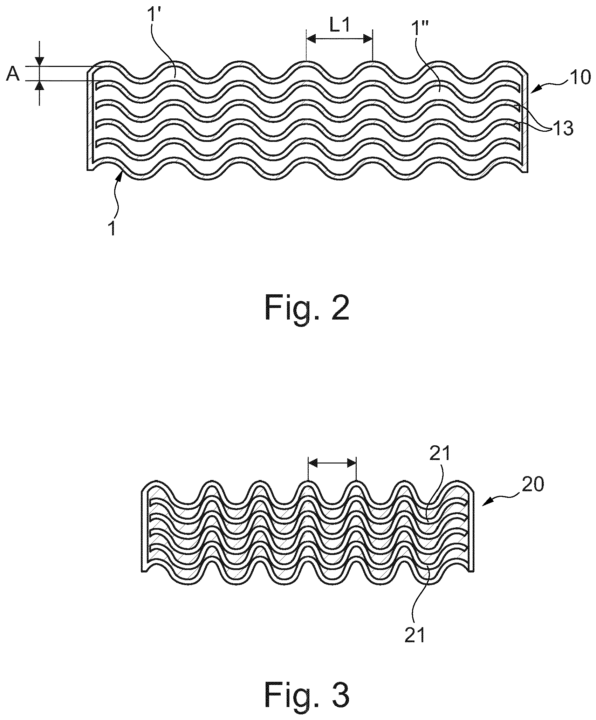

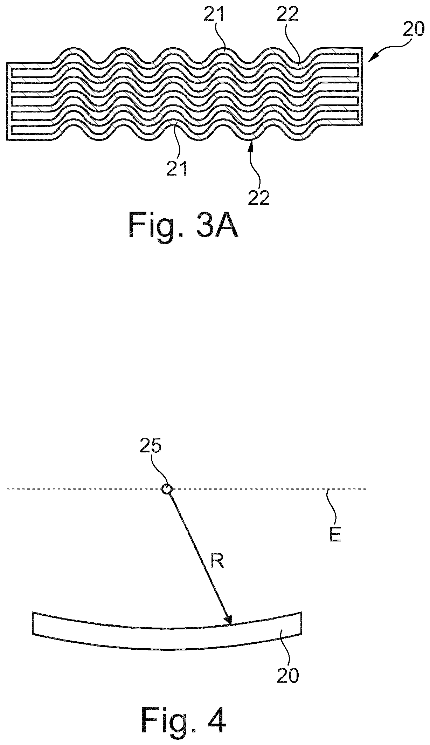

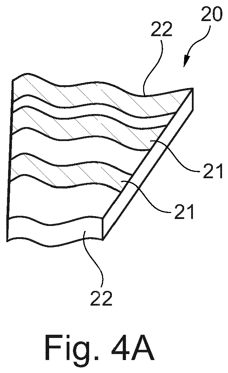

Bevor im Folgenden Ausführungsformen eines Siebdruckverfahrens und der damit hergestellten Grünteile 20 und Ausführungsformen eines Siebdruckverfahrens mit einer thermischen Umformung eines damit hergestellten Grünteils 20 beschrieben werden, wird das grundsätzliche Vorgehen beim dreidimensionalen Siebdruck anhand der Figur 1 dargestellt. Dabei wird auf ein Grünteil 20 (siehe Fig. 3, 3A, 4, 4A) Bezug genommen, das im Rahmen eines pulvermetallurgischen Verfahrens einer Anstreifdichtung (Labyrinthdichtung) für Flugzeugtriebwerk hergestellt wird. Grundsätzlich können aber auch andere Grünteile mit den hier dargestellten Ausführungsformen hergestellt werden.

Zunächst wird Druckmaterial 11 - hier für die Herstellung des Grünteils 20 eine Mischung aus Metallpulver und Binder - mit Hilfe einer Rakel 12 in Pfeilrichtung über die Siebdruckmaske 10 gestreift.

Als Metallpulver kann ein nickelhaltiges Metallpulver, insbesondere ein CoNiCrAlY-Pulver, verwendet werden.

Die Siebdruckmaske 10 weist dabei eine Vielzahl von Öffnungen 13 auf, durch die das Druckmaterial 11 gepresst wird. In der Schnittansicht gemäß Figur 1 sind sieben Öffnungen 13 zu erkennen, durch die das Druckmaterial 11 gedrückt wird.

Unterhalb der Siebdruckmaske 10 bildet sich bei jedem Durchdrücken eine Schicht 14 aus dem Druckmaterial 11 aus. Die einzelnen Lagen sind hier durch Kästchen symbolisch wiedergegeben.

In der Darstellung der Fig. 1 sind bereits zwei vollständige Schichten 14 hergestellt worden, die dritte Schicht 14 wird gerade hergestellt. Durch eine vertikale Verschiebung der Siebdruckmaske 10 nach oben wird so nach und nach eine vertikale Struktur - das Grünteil 20 - durch Siebdruck erzeugt. Somit ist dieses Verfahren ein additives Herstellungsverfahren.

In der Figur 1A ist schematisch dargestellt, dass nach der Herstellung eines aus Schichten 14 aufgebauten Grünteils 20 dieses verformt wird. In der Darstellung wird es mittels eines Formteils 26 um eine Krümmungsachse 25 mit konstantem Krümmungsradius R gebogen, so dass ein schalenförmiges Grünteil 20 entsteht.

Alternativ kann, wie in Fig. 1A dargestellt, auch nach der Herstellung eines aus Schichten 14 aufgebauten Grünteils 20 dieses unter thermischer Einwirkung verformt werden. Die Verformungstemperatur liegt in dem hier dargestellten Beispiel zwischen 30 und 100°C, vor allem aber unterhalb von 90°C, da dabei vorhandenes Wasser bei Atmosphärendruck nicht siedet.

Bei der Verformung kommt es auch auf die Drücke und die relative Feuchtigkeit an. Sinnvoll sind Drücke zwischen 0,8 und 1,2 bar, insbesondere 1 bar und relative Luftfeuchtigkeiten von 60 bis 100%, insbesondere von 80 bis 100%.

Hier wird die Verformung mittels eines Formteils 26 ausgeführt, d.h. das Grünteil 20 wird um eine Krümmungsachse 25 mit konstantem Krümmungsradius R gebogen, so dass ein schalenförmiges Grünteil 20 entsteht. In alternativen Ausführungsformen kann auch eine konkave Form als Formteil 26 verwendet werden, oder es keine konische Verformung vorgenommen werden. Dabei kann die Verformungszeit insbesondere zwischen 1 und 30 Sekunden liegen.

Die im Folgenden beschriebenen Ausführungsformen gelten für das Siebdruckverfahren und das Siebdruckverfahren mit einer thermischen Umformung.

Anschließend erfolgt eine Entbinderung und eine Sinterung des Grünteils 20 in einem Ofen 27 (Figur 1B). Nach Abschluss dieses Schrittes liegt das fertige Bauteil 30 vor, d.h. ein gekrümmtes schalenartiges Bauteil 30. Mehrere von diesen gekrümmten Bauteilen 30 können z.B. durch Hartlöten zu einer ringförmigen Anstreifdichtung zusammengesetzt werden. Somit kann das hergestellte Bauteil 30 auch ein Teil eines aus mehreren Teilen zusammengesetzten Teils sein.

Die hier angesprochenen Ausführungsformen des dreidimensionalen Siebdrucks betreffen insbesondere die Herstellung von Dichtungsflächen als Bauteile 30, wie sie in Turbomaschinen (d.h. rotatorisch arbeitende Maschinen) eingesetzt werden. Solche Anstreifdichtungen 30 werden z.B. als Liner 30 in Luftkanälen eines Gasturbinentriebwerks eines Flugzeugs eingesetzt. Dabei bilden sie zusammen mit Dichtlippen (z.B. auf Scheiben) Labyrinthdichtungen aus.

Wie eingangs erwähnt, ist es bekannt, diese Anstreifdichtungen mit Honigwabenstrukturen auszubilden, wobei die offenen Enden der Honigwaben zu den Rotoren hin zeigen. Wenn z.B. eine Honigwabenstruktur in einer rechteckig ausgebildeten Anstreifdichtung angeordnet ist, führt eine Verformung, z.B. eine einachsige Krümmung der Anstreifdichtung zu Spannungen im Honigwaben-Bauteil. Das Material wird im Bereich des größten Krümmungsradius R an einigen Stellen so weit gedehnt, dass nicht genug Material vorhanden ist; es kommt zu Rissen, die unerwünscht sind. Auf der gegenüberliegenden Seite (d.h. Bereich des kleinsten Krümmungsradius R) kommt es bei einer Verkrümmung des Grünteils 20 zu Stauchungen des Materials, so dass ungewünschte Materialverformungen vorliegen.

Wie im Folgenden noch dargestellt wird, sollen die Honigwaben durch anders geformte vertikale Strukturen in dem Bauteil 30 ersetzt bzw. erweitert werden.

Da Anstreifdichtungen, z.B. zum Auskleiden der luftführenden Kanäle, in einem Gasturbinentriebwerk verwendet werden, hat dieses Problem praktische Relevanz.

In der Fig. 2 ist eine Ausführungsform einer Siebdruckmaske 10 in einer Draufsicht dargestellt, die für die Herstellung eines Grünteils 20 und letztlich eines entsprechenden Bauteils 30 eingesetzt wird. Dabei soll das Grünteil 20 (siehe Figur 3) ohne wesentliche Rissbildung verformbar sein.

In der Ausführungsform der Siebdruckmaske 10 gemäß Figur 2 wird das Einreißen und Stauchen des Materials vermieden, indem die vertikalen Strukturen 21 (siehe Figur 3) im Grünteil 20 wellenförmig geformt ausgebildet werden.

Dazu weist die eben ausgebildete Siebdruckmaske 10 Öffnungen 13 mit einer wellenförmige Struktur 1 auf, die mehrere, parallel zueinander angeordnete Wellenöffnungen 1', 1" aufweist. Wenn nun Metallpulver und Binder als Druckmaterial 11 (siehe Figur 1) durch die Wellenöffnungen 1', 1' gedrückt wird, entsteht eine wellenförmige Materiallage 14, die Teil des Grünteils 20 wird (siehe Fig. 3).

Durch eine Verschiebung nach oben kann dann eine weitere Materiallage 14 auf die zuvor erzeugte wellenförmige Struktur 21 des Grünteils 20 aufgebracht werden. In Richtung der Zeichnungsebene entsteht so eine wellenförmige Struktur 21 als vertikale Wandstruktur. Das Verhalten der so erzeugten wellenförmigen Struktur 21 des Grünteils 20 unter Verformungen wird in der Folge noch beschreiben werden.

In der dargestellten Ausführungsform der Siebdruckmaske 10 sind die wellenförmigen Öffnungen 1', 1" als gleichförmige, etwa sinusförmige Wellenformen ausgebildet, die jeweils eine Breite A aufweisen. Die wellenförmigen Öffnungen 1', 1" sind dabei im gleichen Abstand zueinander ausgebildet und liegen in Phase, d.h. die Wellenberge und -täler liegen in der Draufsicht jeweils auf einer Geraden. Auch die beiden längeren Ränder der Siebdruckmaske 10 - in Figur 2 oben und unten - weisen eine wellenförmige Struktur auf.

Für typische Anwendungen liegt die Breite A der wellenförmigen Öffnungen 1', 1" zwischen 50 und 200 µm, d.h. die Wandstärken der vertikalen, wellenförmigen Strukturen 21 im Grünteil 20 liegen ebenfalls in diesem Bereich.

Die Wellenlänge L1 der wellenförmigen Öffnungen 1', 1" liegt hier bei ca. 2000 µm, so dass auch die Wellenlänge der wellenförmigen Strukturen 21 des Grünteils 20 in diesem Bereich liegen.

In alternativen Ausführungsformen der Siebdruckmaske 10 sind die Öffnungen 1', 1" nur teilweise wellenförmig ausgebildet. So können z.B. an den Seitenrändern der Siebdruckmaske die Öffnungen 13 jeweils gerade ausgebildet sein und erst in der Mitte wellenförmige Strukturen 1', 1" vorliegen. Damit würde das resultierende Grünteil 20 ebenfalls eine wellenförmige Struktur 21 aufweisen, die aber nur in einem oder auch mehreren Teilbereichen wellenförmig ist, wie dies beispielhaft in Fig. 3A dargestellt ist. Die Wellenform kann mindestens teilweise auch von einer reinen Sinusform abweichen und z.B. lineare oder anders gekrümmte Abschnitte aufweisen.

Es ist auch nicht zwingend, dass die wellenförmigen Öffnungen 1', 1" alle in Phase liegen; die Öffnungen 1', 1" können zueinander auch phasenverschoben sein.

Ferner ist es auch nicht zwingend, dass die wellenförmigen Öffnungen 1', 1" alle die gleiche Breite A aufweisen. Es können auch Grünteile 20 hergestellt werden, die vertikale, wellenförmige Strukturen 21 mit unterschiedlichen Wandstärken aufweisen.

In jedem Fall ist es wichtig, dass die Siebdruckmaske 10 mindestens teilweise eine wellenförmige Siebdruckstruktur 1 mit Öffnungen 1', 1", 13 zum Durchdrücken des Druckmaterials 11 aufweist, so dass das damit hergestellte Grünteil 20 mindestens teilweise (abschnittsweise) eine dreidimensionale wellenförmige Struktur 21 aufweist.

Ein solches Grünteil 20 ist in Figur 3 in einer Draufsicht dargestellt, wobei das Grünteil 20 verformt wurde, da das resultierende Bauteil 30 - hier nicht dargestellt als ein Teil einer Anstreifdichtung - ebenfalls gekrümmt ist.

Die wellenförmige Struktur 21 ist in dem Beispiel der Fig. 2, 3, 3A im Wesentlichen längsgestreckt. Es ist aber auch möglich, dass die wellenförmige Struktur 21 einer Honigwabenstruktur oder einer Rautenstruktur aufgeprägt wird. Dies bedeutet, dass die Wandungen der Honigwaben oder der Rauten mindestens teilweise wellenförmige Abschnitte aufweisen, d.h. die Öffnungen in der Siebdruckmaske weisen mindestens teilweise wellenförmige Strukturen auf. Auch eine solche Honigwaben- oder Rautenstruktur kann sich den oben beschrieben Ziehharmonika-Effekt zu Nutze machen, wenn die Struktur gebogen oder gestaucht wird.

In der Figur 4 ist eine Seitenansicht dieses Grünteils 20 dargestellt, bei der das Grünteil 20 um eine Krümmungsachse 25 gekrümmt wurde, wie dies im pulvermetallurgischen Herstellungsverfahren (siehe Fig. 1A) ausgeführt wird. Auf weitere mögliche Verformungen wird noch eingegangen werden.

Das Grünteil 20 weist an den beiden Seitenrändern gerade Außenränder 22 auf. Die beiden gegenüberliegenden Langseiten sind wellenförmig ausgebildet. Die wellenförmige Struktur 21 im Grünteil 20 ist in vertikaler Richtung (d.h. aus der Zeichnungsebene hinaus) zwischen 1 und 20 mm, insbesondere zwischen 2 und 10 mm, hoch gegenüber der Basis.

Durch die Verformung des Grünteils 20 (in Figur 3 eine Krümmung aus der Zeichnungsebene hinaus) ist die Längserstreckung des Grünteils 20 kleiner geworden als die Längserstreckung der ebenen Siebdruckmaske 10. Dies führt dazu, dass die wellenförmigen Strukturen 21 bei dieser Krümmung am vertikal oberen Ende (d.h. im Bereich des kleineren Krümmungsradius R) der wellenförmigen Struktur 21 verkürzt werden. Die Wellenlänge L2 der wellenförmigen Strukturen 21 ist dann kleiner als die Wellenlänge L1 der wellenförmigen Öffnungen 1', 1' der Siebdruckmaske 10 (siehe Figur 2).

Am hier nicht sichtbaren Grund (d.h. dem Bereich des größten Krümmungsradius R) der vertikalen, wellenförmigen Struktur 21 erfolgt eine Dehnung des Grünteils 20, d.h. die dortige Wellenlänge wird länger als die Wellenlänge L1 der wellenförmigen Öffnungen 1', 1" der Siebdruckmaske 10.

Die wellenförmige Struktur 21 des Grünteils ist bei dieser Art der Verformung so nachgiebig ausgebildet, dass es zu keinen Rissen und Stauchungen kommt, oder diese Wirkungen zumindest minimiert werden.

Wenn die wellenförmige Struktur 21 gedehnt wird, wird die Wellenlänge der Struktur einfach länger, da genug Material im Grünteil 20 vorhanden ist, dieser Verformung zu folgen. An den Stellen, an denen es zu einer Stauchung kommt, wird die Wellenlänge entsprechend verkürzt.

Man könnte dies auch als "Ziehharmonika-Effekt" bezeichnen. Damit kann - insbesondere ohne Veränderung der Zusammensetzung des Druckmaterials 11 - allein mit strukturell-geometrischen Maßnahmen einer Schädigung des Grünteils 20 vorgebeugt werden.

Wie oben beschrieben, wurde dieses Grünteil 20 durch ein dreidimensionales Siebdruckverfahren hergestellt, wobei das Grünteil 20 schichtenweise aufgebaut wurde. In der bisher dargestellten Ausführungsform des Siebdruckverfahrens wird über den gesamten Prozess das gleiche Druckmaterial 11 verwendet. Die Schichten 14, aus denen die wellenförmigen Strukturen 21 des Grünteils 20 aufgebaut sind, haben jeweils die gleiche Zusammensatzung aus Metallpulver und Binder (und ggf. weiteren Stoffen, wie z.B. Wasser). Dies muss aber nicht zwingend der Fall sein. In alternativen Ausführungsformen kann für unterschiedliche Schichten 14, unterschiedliches Druckmaterial 11 eingesetzt werden. Damit kann z.B. eine wellenförmige Struktur 21 aufgebaut werden, deren Eigenschaften sich entlang der Höhe ändert. So kann an der Spitze (d.h. der letzten Schicht) spröderes Material aufgedruckt werden als in unteren Lagen.

In Figur 4 ist schematisch eine Seitenansicht eines Grünteils 20 dargestellt, das um eine Krümmungsachse 25 verformt, d.h. gekrümmt, wird. Der Krümmungsradius R ist in der Figur 4 dargestellt. Die Krümmungsachse 25 liegt in einer Ebene E, die parallel zu einer der ungeformten Seitenfächer 22 des Grünteils 20 liegt. Damit wird das Grünteil 20 schalenförmig gekrümmt und weist überall den gleichen Krümmungsradius R auf. Aus dem quaderförmigen Grünteil 20 wird ein schalenförmiges Grünteil 20, das einem Teil einer Kreiszylinderwandung entspricht.

Die Verformung des Grünteils 21 kann aber auch in anderer Weise erfolgen. Neigt man z.B. die Krümmungsachse 25 relativ zu der Ebene E, so bewirkt eine Krümmung des Grünteils 20 um diese schräg im Raum stehende Krümmungsachse 25 die Herstellung eines konisch geformten Grünteils 20, und damit auch eines Bauteils 30. Dies ist schematisch in Figur 4A dargestellt, die ein konisch geformtes Grünteil 20 mit wellenförmigen Strukturen 21 und wellenförmigen Rändern 22 zeigt.

Grundsätzlich ist auch möglich, das Grünteil 20 komplexer zu verformen, indem mehr als eine Krümmungsachse 25 verwendet wird. Auch kann das Grünteil 20 die Form einer Mulde oder einer Erhebung aufweisen, die jeweils rußfrei und stauchungsfrei verformbar sind, da sie wellenförmige Strukturen 21 aufweisen.

### Bezugszeichenliste

- 1: wellenförmige Siebdruckstruktur
- 1', 1": wellenförmige Öffnungen der Siebdruckstruktur

- 10: Siebdruckmaske
- 11: Druckmaterial
- 12: Rakel
- 13: Öffnung in Siebdruckmaske
- 14: hergestellte Schicht

- 20: siebgedrucktes Grünteil
- 21: wellenförmige Struktur in Grünteil
- 22: Rand des Grünteils
- 25: Krümmungsachse
- 26: Formteil
- 27: Vakuumkammer

- 30: Bauteil

- A: Breite von wellenförmigen Öffnungen in Siebdruckmaske
- E: Ebene, in der die Krümmungsachse liegt
- L1: Wellenlänge im unverformten Zustand
- L2: Wellenlänge im verformten Zustand
- R: Krümmungsradius

## Patentansprüche

1. Dreidimensionales Siebdruckverfahren zur Herstellung eines Grünteils (20) aus Druckmaterial (11) für ein pulvermetallurgisches Bauteil (30), wobei das pulvermetallurgische Bauteil (30) als Anstreifdichtung für eine Turbomaschine oder als ein Teil einer Anstreifdichtung für eine Turbomaschine ausgebildet, und mindestens teilweise schalenförmig oder konisch ausgebildet ist, wobei das Druckmaterial (11) einen Anteil aus Metallpulver oder Keramikpulver, und Binder aufweist oder aus diesen Materialien besteht, wobei
eine Siebdruckmaske (10) eine Siebdruckstruktur (1) mit Öffnungen (1', 1", 13) zum Durchdrücken des Druckmaterials (11) aufweist, wobei die Öffnungen (1', 1') teilweise wellenförmig ausgebildet sind, so dass das Grünteil (20) mindestens teilweise eine dreidimensionale wellenförmige Struktur (21) und / oder wellenförmige Ränder (22) aufweist,
**dadurch gekennzeichnet, dass**
das Grünteil (20) nach der Herstellung verformt wird, wobei durch die Verformung eine Streckung und / oder eine Stauchung zumindest von Teilen der wellenförmigen Struktur (21) des Grünteils (20) bewirkt wird, die durch Anpassung der Wellenlänge (L2) ausgeglichen wird, derart, dass die wellenförmigen Strukturen (21) bei der Verformung am vertikal oberen Ende der wellenförmigen Struktur (21), im Bereich eines kleineren Krümmungsradius (R), verkürzt werden, und
die Siebdruckstruktur (1) eine Vielzahl von wellenförmigen Öffnungen (1', 1") aufweist, die parallel zueinander angeordnet sind.

2. Dreidimensionales Siebdruckverfahren nach Anspruch 1, **dadurch gekennzeichnet, dass** das Grünteil (20) nach der Herstellung bei Temperaturen zwischen 30 und 100 °C, insbesondere unterhalb von 90°, ganz insbesondere zwischen 30 und 60°C verformt wird, wobei die Temperatur insbesondere konstant bleibt und / oder die Verformung mittels eines Formteils (26), insbesondere im Bereich zwischen 1 und 30 Sekunden erfolgt.

3. Dreidimensionales Siebdruckverfahren nach Anspruch 1 oder 2, **dadurch gekennzeichnet, dass** die wellenförmige Struktur (21) die Form einer Honigwabe oder einer Raute aufweist.

4. Dreidimensionales Siebdruckverfahren nach einem der Ansprüche 1 bis 3, **dadurch gekennzeichnet, dass** die Vielzahl von wellenförmigen Öffnungen (1', 1") untereinander den gleichen Abstand voneinander haben und / oder die mindestens teilweise untereinander in Phase angeordnet sind.

5. Dreidimensionales Siebdruckverfahren nach mindestens einem der Ansprüche 1 bis 4, **dadurch gekennzeichnet, dass** mindestens eine wellenförmige Öffnung (1', 1") der Siebdruckstruktur (1) über ihre Längserstreckung eine konstante Wellenlänge (L1) aufweist, wobei die Wellenlänge (L1) insbesondere größer als 50 µm und kleiner als 5000 µm ist, oder dass die Breite (A) mindestens einer wellenförmigen Öffnung (1', 1') größer als 50 µm und kleiner als 5000 µm ist.

6. Dreidimensionales Siebdruckverfahren nach mindestens einem der Ansprüche 1 bis 5, **dadurch gekennzeichnet, dass** mindestens eine wellenförmige Struktur (21) des Grünteils (20) zwischen 1 und 20 mm, insbesondere zwischen 2 und 10 mm, ganz insbesondere 5 mm hoch ausgebildet ist.

7. Dreidimensionales Siebdruckverfahren nach mindestens einem der Ansprüche 1 bis 6, **dadurch gekennzeichnet, dass** mindestens eine wellenförmige Öffnung (1', 1") der Siebdruckmaske (10) und mindestens eine wellenförmige Struktur (21) des Grünteils (20) im horizontalen Schnitt mindestens teilweise eine Sinusform aufweisen.

8. Dreidimensionales Siebdruckverfahren nach einem der Ansprüche 3 bis 7, **dadurch gekennzeichnet, dass** die Verformung um mindestens eine Krümmungsachse (25) erfolgt.

9. Dreidimensionales Siebdruckverfahren nach einem der Ansprüche 1 bis 7, **dadurch gekennzeichnet, dass** das Grünteil (20) um zwei Achsen verformt wird, insbesondere dass das Grünteil (20) so verformt wird, dass eine Vertiefung oder eine Auswölbung hervorgerufen wird.

10. Dreidimensionales Siebdruckverfahren nach mindestens einem der Ansprüche 1 bis 9, **dadurch gekennzeichnet, dass** das unverformte Grünteil (20) im Wesentlichen quaderförmig ausgebildet ist und die Verformung des Grünteils (20) eine Biegung um eine Krümmungsachse (25) umfasst, wobei die Krümmungsachse (25) in einer Ebene liegt, die parallel oder geneigt zu einer Seitenfläche des Grünteils (20) liegt.

11. Dreidimensionales Siebdruckverfahren nach mindestens einem der Ansprüche 1 bis 10, **dadurch gekennzeichnet, dass** nach der Verformung eine Entbinderung und eine Sinterung, insbesondere unter Vakuum, durchgeführt wird.

12. Dreidimensionales Siebdruckverfahren nach mindestens einem der Ansprüche 1 bis 11, **dadurch gekennzeichnet, dass** die Verformung des Grünteils (20) bei einem Druck zwischen 0,8 und 1,2 bar, insbesondere bei 1 bar erfolgt, oder dass die Verformung des Grünteils (20) bei einer relativen Luftfeuchtigkeit zwischen 60 und 100%, insbesondere bei einer relativen Luftfeuchtigkeit zwischen 80 und 100% erfolgt.

13. Bauteil, herstellbar mit einem Verfahren gemäß mindestens einem der Ansprüche 1 bis 12, wobei das Bauteil als Anstreifdichtung für eine Turbomaschine oder als ein Teil einer Anstreifdichtung für eine Turbomaschine ausgebildet und mindestens teilweise schalenförmig oder konisch ausgebildet ist.

14. Bauteil (30) nach Anspruch 13, **dadurch gekennzeichnet, dass** ein Krümmungsradius (R) des Bauteils (30) zwischen 50 mm und 2000 mm liegt, insbesondere zwischen 100 und 200 mm.

## Claims

1. 3D screen printing method for producing a green part (20) from printing material (11) for a powder metallurgical build part (30), wherein the powder metallurgical build part (30) is designed as a grazing seal for a turbomachine or as a part of a grazing seal for a turbomachine, and is designed at least partially as shell-shaped or conical, wherein the printing material (11) has a proportion of metal powder or ceramic powder, and binder or consists of these materials, wherein a screen printing mask (10) has a screen printing structure (1) with openings (1', 1", 13) for forcing through the printing material (11), wherein the openings (1', 1') are designed as partially wavy such that the green part (20) at least partially has a three-dimensional wavy structure (21) and / or wavy edges (22), **characterized in that**
the green part (20) is deformed after production, wherein the deformation causes stretching and / or compression of at least parts of the wavy structure (21) of the green part (20), which is compensated by adjusting the wavelength (L2), such that the wavy structures (21) are shortened during the deformation at the vertically upper end of the wavy structure (21), in the region of a smaller radius of curvature (R), and
the screen printing structure (1) has a plurality of wavy openings (1', 1") arranged in parallel with each other.

2. 3D screen printing method according to claim 1, **characterized in that,** after production, the green part (20) is deformed at temperatures between 30 and 100°C, in particular below 90°, very particularly between 30 and 60°C, wherein the temperature in particular remains constant and / or the deformation takes place by means of a shaped part (26), in particular in the range between 1 and 30 seconds.

3. 3D screen printing method according to claim 1 or 2, **characterized in that** the wavy structure (21) has the shape of a honeycomb or a diamond.

4. 3D screen printing method according to one of claims 1 to 3, **characterized in that** the plurality of wavy openings (1', 1") are the same distance from each other and / or are arranged at least partially in phase with each other.

5. 3D screen printing method according to at least one of claims 1 to 4, **characterized in that** at least one wavy opening (1', 1") of the screen printing structure (1) has a constant wavelength (L1) over its longitudinal extent, wherein the wavelength (L1) is in particular greater than 50 µm and less than 5000 µm, or that the width (A) of at least one wavy opening (1', 1') is greater than 50 µm and less than 5000 µm.

6. 3D screen printing method according to at least one of claims 1 to 5, **characterized in that** at least one wavy structure (21) of the green part (20) is designed as between 1 and 20 mm, in particular between 2 and 10 mm, very particularly 5 mm high.

7. 3D screen printing method according to at least one of claims 1 to 6, **characterized in that** at least one wavy opening (1', 1") of the screen printing mask (10) and at least one wavy structure (21) of the green part (20) have at least partially a sinusoidal shape in the horizontal section.

8. 3D screen printing method according to one of claims 3 to 7, **characterized in that** the deformation takes place about at least one axis of curvature (25).

9. 3D screen printing method according to one of claims 1 to 7, **characterized in that** the green part (20) is deformed about two axes, in particular the green part (20) is deformed such that a depression or a bulge is caused.

10. 3D screen printing method according to at least one of claims 1 to 9, **characterized in that** the undeformed green part (20) is designed as substantially cuboidal in shape and the deformation of the green part (20) comprises a bend about an axis of curvature (25), wherein the axis of curvature (25) is in a plane that is parallel or inclined to a side surface of the green part (20).

11. 3D screen printing method according to at least one of claims 1 to 10, **characterized in that** after deformation, binder removal and sintering, in particular under vacuum, are carried out.

12. 3D screen printing method according to at least one of claims 1 to 11, **characterized in that** the deformation of the green part (20) takes place at a pressure between 0.8 and 1.2 bar, in particular at 1 bar, or **in that** the deformation of the green part (20) takes place at a relative humidity between 60 and 100%, in particular at a relative humidity between 80 and 100%.

13. Build part producible by a method according to at least one of claims 1 to 12, wherein the build part is designed as a grazing seal for a turbomachine or as a part of a grazing seal for a turbomachine and is designed at least partially as shell-shaped or conical.

14. Build part (30) according to claim 13, **characterized in that** a radius of curvature (R) of the build part (30) is between 50 mm and 2000 mm, in particular between 100 and 200 mm.

## Revendications

1. Procédé de sérigraphie 3D permettant la fabrication d'une pièce verte (20) à partir d'un matériau d'impression (11) pour une pièce métallurgique en poudre (30), ladite pièce métallurgique en poudre (30) étant conçue sous la forme d'un joint abradable pour une turbomachine ou sous la forme d'une pièce d'un joint abradable pour une turbomachine, et étant au moins partiellement en forme de cuvette ou conique, ledit matériau d'impression (11) comprenant une proportion de poudre métallique ou de poudre céramique et un liant ou se composant de ces matériaux,
un masque de sérigraphie (10) comprenant une structure de sérigraphie (1) avec des ouvertures (1', 1", 13) pour la poussée à travers le matériau d'impression (11), lesdites ouvertures (1', 1") étant partiellement ondulée, de sorte que la pièce verte (20) présente au moins partiellement une structure 3D ondulée (21) et/ou des bords ondulés (22),
**caractérisé en ce que**
la pièce verte (20) est déformée après la fabrication, ladite déformation provoquant un étirement et/ou une compression d'au moins des partie de la structure ondulée (21) de la pièce verte (20), qui est compensée par l'adaptation de la longueur d'onde (L2) de sorte que les structures ondulées (21) soient raccourcies pendant la déformation au niveau de l'extrémité supérieure verticale de la structure ondulée (21), dans la zone d'un diamètre de courbure (R) plus petit, et
la structure de sérigraphie (1) comporte une pluralité d'ouvertures ondulées (1', 1") qui sont disposées parallèles les unes aux autres.

2. Procédé de sérigraphie 3D selon la revendication 1, **caractérisé en ce que** la pièce verte (20) est déformée après la fabrication à des températures comprises entre 30 et 100°C, en particulier inférieures à 90°C, plus particulièrement comprises entre 30 et 60°C, ladite température restant en particulier constante et/ou la déformation étant réalisée au moyen d'une pièce moulée (26), en particulier dans la plage comprise entre 1 et 30 secondes.

3. Procédé de sérigraphie 3D selon la revendication 1 ou 2, **caractérisé en ce que** la structure ondulée (21) présente la forme d'un nid d'abeilles ou d'un losange.

4. Procédé de sérigraphie 3D selon l'une des revendication 1 à 3, **caractérisé en ce que** la pluralité d'ouvertures ondulées (1', 1") se trouvent à la même distance les unes des autres et/ou sont au moins partiellement disposées en phase les unes par rapport aux autres.

5. Procédé de sérigraphie 3D selon au moins l'une des revendication 1 à 4, **caractérisé en ce qu'**au moins une ouverture ondulée (1', 1") de la structure de sérigraphie (1) présente une longueur d'onde (L1) constante sur son étendue longitudinale, ladite longueur d'onde (L1) étant en particulier supérieure à 50 µm et inférieure à 5000 µm, ou **en ce que** la largeur (A) d'au moins une ouverture ondulée (1', 1") est supérieure à 50 µm et inférieure à 5000 µm.

6. Procédé de sérigraphie 3D selon au moins l'une des revendication 1 à 5, **caractérisé en ce qu**'au moins une structure ondulée (21) de la pièce verte (20) est réalisée de manière à faire entre 1 et 20 mm, en particulier entre 2 et 10 mm, plus particulièrement 5 mm de haut.

7. Procédé de sérigraphie 3D selon au moins l'une des revendication 1 à 6, **caractérisé en ce qu'**au moins une ouverture ondulée (1', 1") du masque de sérigraphie (10) et au moins une structure ondulée (21) de la pièce verte (20) présentent au moins partiellement une forme sinusoïdale dans la section horizontale.

8. Procédé de sérigraphie 3D selon l'une des revendication 3 à 7, **caractérisé en ce que** la déformation se produit autour d'au moins un axe de courbure (25).

9. Procédé de sérigraphie 3D selon l'une des revendication 1 à 7, **caractérisé en ce que** la pièce verte (20) est déformée autour de deux axes, en particulier **en ce que** la pièce verte (20) est déformée de manière à générer un creux ou une protubérance.

10. Procédé de sérigraphie 3D selon au moins l'une des revendication 1 à 9, **caractérisé en ce que** la pièce verte (20) non déformée est sensiblement parallélépipédique et la déformation de la partie verte (20) comprend une courbure autour d'un axe de courbure (25), ledit axe de courbure (25) se trouvant dans un plan qui est parallèle ou incliné par rapport à une surface latérale de la pièce verte (20).

11. Procédé de sérigraphie 3D selon au moins l'une des revendication 1 à 10, **caractérisé en ce que,** après la déformation, un déliantage et un frittage, en particulier sous vide, sont effectués.

12. Procédé de sérigraphie 3D selon au moins l'une des revendication 1 à 11, **caractérisé en ce que** la déformation de la pièce verte (20) se produit à une pression comprise entre 0,8 et 1,2 bar, en particulier à 1 bar, ou **en ce que** la déformation de la pièce verte (20) se produit à une humidité relative comprise entre 60 et 100 %, en particulier à une humidité relative comprise entre 80 et 100 %.

13. Pièce pouvant être fabriquée à l'aide d'un procédé selon au moins l'une des revendications 1 à 12, ladite pièce étant conçue sous la forme d'un joint abradable pour une turbomachine ou sous la forme d'une pièce d'un joint abradable pour une turbomachine et étant au moins partiellement en forme de cuvette ou conique.

14. Pièce (30) selon la revendication 13, **caractérisée en ce que** le rayon de courbure (R) de la pièce (30) est compris entre 50 mm et 2000 mm, en particulier entre 100 et 200 mm.
